# EUROPEAN PATENT SPECIFICATION

(11) **EP 3 748 123 B1**
(45) Date of publication and mention of the grant of the patent: **27.03.2024**
(21) Application number: 18903239.4
(22) Date of filing: 08.02.2018
(51) Int. Cl.: E21F 17/00, E21F 17/18, G21C 17/017, G01S 15/86, G01S 15/88, E03F 7/12

(54) **TUNNEL WALL-ADHERING SHUTTLE PLATFORM AND TUNNEL MONITORING APPARATUS**
AN TUNNELWAND HAFTENDE SHUTTLE-PLATTFORM UND TUNNELÜBERWACHUNGSVORRICHTUNG
PLATE-FORME NAVETTE ADHÉRANT À UNE PAROI DE TUNNEL ET APPAREIL DE SURVEILLANCE DE TUNNEL

(30) Priority: 30.01.2018 CN 201810092226
(43) Date of publication of application: 09.12.2020
(73) Proprietor: Ling Dong Nuclear Power Co., Ltd, Shenzhen, Guangdong 518029 (CN); China Nuclear Power Technology Research Institute Co., Ltd., Futian District Shenzhen Guangdong 518029 (CN); Taishan Nuclear Power Joint Venture Co., Ltd, Chixi Town Taishan, Guangdong 529200 (CN); China General Nuclear Power Corporation, Futian District Shenzhen Guangdong 518029 (CN); CGN Power Co., Ltd., Futian District Shenzen Guangdong 518029 (CN)
(72) Inventor: CHEN, Shaonan, Shenzhen, Guangdong 518029 (CN); WANG, Guohe, Shenzhen, Guangdong 518029 (CN); BA, Jinyu, Shenzhen, Guangdong 518029 (CN); ZHANG, Meiling, Shenzhen, Guangdong 518029 (CN); LIU, Shuai, Shenzhen, Guangdong 518029 (CN); LI, Bing, Shenzhen, Guangdong 518029 (CN); YE, Huan, Shenzhen, Guangdong 518029 (CN); LI, Ke, Shenzhen, Guangdong 518029 (CN); ZHOU, Jun, Shenzhen, Guangdong 518029 (CN); HU, Haixiang, Shenzhen, Guangdong 518029 (CN); WANG, Xuezhu, Shenzhen, Guangdong 518029 (CN); CHEN, Zhi, Shenzhen, Guangdong 518029 (CN); WU, Yu, Shenzhen, Guangdong 518029 (CN); ZHAO, Apeng, Shenzhen, Guangdong 518029 (CN); WU, Fengqi, Shenzhen, Guangdong 518029 (CN); YIN, Yong, Shenzhen, Guangdong 518029 (CN); LI, Haiyang, Shenzhen, Guangdong 518029 (CN)
(74) Representative: Mewburn Ellis LLP
(86) International application number: PCT/CN2018/075780
(87) International publication number: WO 2019/148529

(56) References cited:
- WO-A1-03/044320
- CN-A- 104 261 286
- CN-A- 105 067 631
- CN-A- 105 774 934
- CN-A- 106 625 700
- CN-B- 102 094 454
- CN-U- 205 504 342
- CN-U- 205 712 454
- CN-U- 205 712 454
- DE-U1-202006 016 642
- JP-A- H0 266 495
- KR-A- 20140 112 243
- KR-A- 20170 137 472

## Description

### FIELD OF THE INVENTION

The present invention relates to a field of underwater monitoring equipment, and in particular relates to a tunnel shuttle platform against wall and a tunnel monitoring apparatus that can shuttle against an inner wall of the tunnel in a reciprocating motion in a stable posture.

### BACKGROUND OF THE INVENTION

Water intake tunnels need to meet the continuous high-flow water delivery. During the operation, the inner wall of the tunnel may be adhered with sea creatures, sediment deposits, and foreign matters, for example, which reduces the water delivery capacity of the tunnel and may cause damage to related equipments. Therefore, it is necessary to install underwater monitoring equipment to monitor the situation in the tunnel. However, due to the long distance, large diameter, and high flow speed of the water intake tunnel, the existing underwater monitoring equipment requires to be configured sufficient own power supply to drive the shuttle in the tunnel once. The great power supplies are heavy, so it is usually impossible to realize a full monitoring of the tunnel, and the monitoring posture is unstable due to the high water flow speed. In addition, this monitoring equipment that relies on self-provided power to move and shuttle also has technical problems such as bulkiness, poor endurance, and difficult maintenance.

CN 205712454U discloses a towed drainage pipe TV detection device including a controller, a cable, a cable drum, a visual detector ship, a haulage rope and a receipts rope winch to detect the pipeline.

KR20170137472A discloses an inspection apparatus of overcoming a situation in which sediments which cannot be driven by a general navigation cruiser are distributed or a fluid.

KR20140112243A discloses underground pipeline contamination irradiation equipment which minimizes the damage of the contamination irradiation equipment and easily performs the inspection of the underground pipeline.

Therefore, there is an urgent need for a tunnel shuttle platform that can maintain a stable posture and shuttle the entire tunnel in a tunnel with water.

### SUMMARY OF THE INVENTION

One objective of the present invention is to provide a tunnel shuttle platform against wall that can shuttle against an inner wall of the tunnel in a reciprocating motion and maintain a stable posture. During the shuttle of the carrying platform, the monitoring mechanism carried by the carrying platform can monitor the working conditions, especially the foreign matters in the tunnel in real time, and the shuttle is stable and reliable.

Another objective of the present invention is to provide a tunnel monitoring apparatus that can shuttle against an inner wall of the tunnel in a reciprocating motion a stable posture and monitor the foreign matters in the tunnel.

Aspects of the invention are set out in the appended claims, and relate to a tunnel shuttle platform against wall, adapted for shuttling in water in a tunnel below a shield shaft. The platform comprises a control device, a winch, a cable, and a carrying platform capable of floating on water, the control device is electrically connected with the winch, the carrying platform is electrically connected with the control device via the cable, one end of the cable is connected to the carrying platform, and another end of the cable is wound onto the winch, and the cable is controlled to release or retract by the control device such that the carrying platform can shuttle against an inner wall of the tunnel in a reciprocating motion. A cable support guide device is configured and comprises a positioning portion and a suspension portion that are connected to form an L-shaped structure, and the cable slidably passes through the suspension portion; the suspension portion is provided with a guide wheel for supporting and guiding the cable. A support wheel is pivotally connected to the suspension portion, the support wheel and the guide wheel are configured at two opposite sides of the suspension portion, and the suspension portion is hung in the shield shaft by virtue of contact between the support wheel and a well wall of the shield shaft.

In comparison with the prior art, in the present invention, the control device controls the rolling speed of the winch to control the retracting and the unwinding of the cable, the carrying platform can float in the tunnel due to the buoyancy itself and is maintained to shuttle against the top of the inner wall of the tunnel at a constant speed, under the combined action of the push of water and the pulling traction of the cable. Therefore, a safe shuttle of the carrying platform is ensured, as the risk of collision in the tunnel is avoided. At the same time, the carrying platform can be loaded with various monitoring mechanisms to monitor the working conditions in the tunnel, so that these monitoring mechanisms can be synchronized with the carrying platform to shuttle stably in the tunnel, so as to monitor the working conditions in the tunnel in real time, especially monitor the foreign matters in the tunnel, thereby ensuring the safe and stable operation of the nuclear power plant. In addition, the carrying platform that can be floated on the water can shuttle and travel along the inner wall of the tunnel, by the push of the water current and the traction of the cable, without a self-provided power, which effectively solves the technical defects of bulkiness, poor endurance, unstable attitude and difficult maintenance of the existing monitoring equipment that requires electric power to shuttle.

Specifically, the cable is controlled to release or retract such that the carrying platform can shuttle against the inner wall of the tunnel in a reciprocating motion, at a constant speed.

Specifically, the cable is controlled to release or retract such that the carrying platform can shuttle against a top of the inner wall of the tunnel in a reciprocating motion, at a constant speed.

Specifically, the platform further includes a walking wheel pivotally connected to the carrying platform, whereby the walking wheel rolls on the inner wall of the tunnel such that the carrying platform shuttles in the tunnel in a reciprocating motion.

Specifically, the cable support guide device is detachable.

Specifically, the suspension portion is a telescopic structure with multiple sections nested.

Specifically, the guide wheel is provided with a limiting guide slot for the cable.

Specifically, the guide wheel is pivotally connected to the suspension portion.

Specifically, the guide wheel is protruded from one side of the suspension portion.

Specifically, the positioning portion is provided with a second guide wheel for supporting and guiding the cable, and the second guide wheel is provided with a limiting guide slot for the cable.

Specifically, the cable is a buoyancy armored cable.

Specifically, the cable is capable of suspending in water.

Specifically, an optical fiber is configured inside the cable for signal transmission.

Specifically, the winch is provided with a measuring device for measuring a retracted length of the cable to determine a position of the carrying platform.

Accordingly, the present invention further provides a tunnel monitoring apparatus adapted for shuttling in a tunnel under a shield shaft and monitoring foreign matters, and the tunnel monitoring apparatus includes the tunnel shuttle platform against wall mentioned above and a monitoring mechanism for monitoring the foreign matters, the monitoring mechanism is supported by the carrying platform of the tunnel shuttle platform against wall, and the monitoring mechanism is electrically connected with the control device via the cable.

Specifically, the monitoring mechanism is connected to and protruded from the carrying platform.

Specifically, the apparatus further includes a frame support connected to and protruded from the carrying platform, and the monitoring mechanism is supported on the frame support.

Specifically, the frame support is an inverted Y shape structure.

Specifically, the frame support is a frame structure.

Specifically, the cable is fixed on a middle of the frame support.

Specifically, the carrying platform is flat.

Specifically, the carrying platform has a hollow structure inside.

Specifically, the carrying platform has a curved surface where is close to the top of the inner wall of the tunnel.

Specifically, the curved surface has a same radian with the top of the inner wall of the tunnel.

Specifically, the curved surface has a radius smaller than that of the inner wall of the tunnel.

Specifically, the carrying platform has a flat surface where is far away from the top of the inner wall of the tunnel, and the flat surface is connected to the frame support.

Specifically, the monitoring mechanism comprises a power module, a control module and a monitoring assembly that are electrically connected with the power module, the power module is mounted on a bottom of the frame support, the control module is mounted on a middle of the frame support, and the monitoring assembly is mounted on the frame support.

Specifically, multiple monitoring assemblies are uniformly distributed on the frame support.

Specifically, two power modules are symmetrically mounted at two ends of the bottom of the frame support.

Specifically, the apparatus further includes two power module protective shells in which the power modules are configured, respectively, and the two power module protective shells are connected at two ends of the bottom of the frame support, respectively.

Specifically, each of the power module protective shells is a hollow structure.

Specifically, the apparatus further includes a control module protective shell in which the control module is configured, and the control module protective shell is connected at a middle of the frame support.

Specifically, the control module protective shell is a hollow structure.

Specifically, the control module is communicated with the control device and configured to receive a signal from the control device via the cable thereby monitoring actions of the monitoring assembly.

Specifically, the monitoring assembly comprises sonar, imaging equipment, and underwater lights.

### BRIEF DESCRIPTION OF THE DRAWINGS

Fig. 1 is a schematic view of a tunnel monitoring apparatus according to one embodiment of the present invention;
Fig. 2 is a schematic view of a cable support guide device of the present invention;
Fig. 3 is a schematic view of the cable support guide device that is retracted;
Fig. 4 is a schematic view of a carrying platform with a monitoring mechanism according to one embodiment of the present invention;
Fig. 5 is another schematic view of a carrying platform with a monitoring mechanism according to one embodiment of the present invention;

### DETAILED DESCRIPTION OF ILLUSTRATED EMBODIMENTS

For further understanding the features, technical solutions, purposes and functions of the present invention, and explaining the advantages and spirits of the invention, detailed descriptions for embodiments follow.

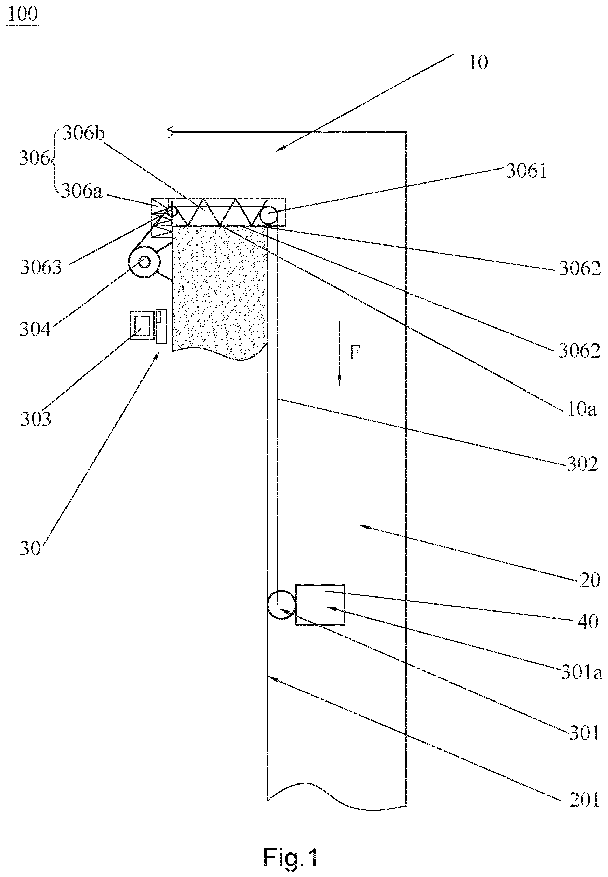

Referring to Figs. 1-5, a tunnel monitoring apparatus 100 according to one embodiment of the present invention is adapted for shuttling in a tunnel under a shield shaft and monitoring foreign matters, and includes a tunnel shuttle platform against wall 30 and a monitoring mechanism 40 for monitoring foreign matters in the tunnel 20. The monitoring mechanism 40 is supported by a carrying platform 301, which is floated on water, of the tunnel shuttle platform against wall 30. Under the control of the cable 302 by the control device 30, the carrying platform 301 can shuttle and travel against the inner wall 201 of the water-filled tunnel 20 in reciprocating motion, in a stable posture. Further, the monitoring mechanism 40 is carried on the carrying platform 301, so that the monitoring mechanism 40 can also stably shuttle against the inner wall of the tunnel 20 together with the carrying platform 301, thereby monitoring the foreign matter working condition in the tunnel 20 in real time. Of course, when there is a need to monitor other working conditions in the tunnel 20, it's available to configure corresponding apparatus on the carrying platform 301. It should be noted that, the tunnel monitoring apparatus 100 of the present invention is especially suitable to monitor the working conditions, especially the foreign matters in the tunnel 20 of a nuclear power plant. The tunnel monitoring apparatus 100 and tunnel shuttle platform against wall 30 of the present invention will be described in details hereafter, by combining with Figs.1-5.

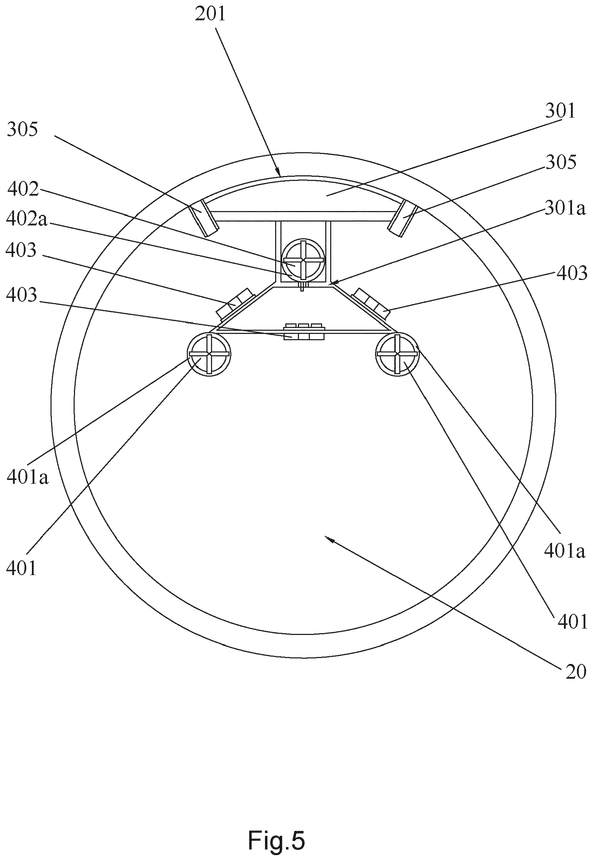

Referring to Figs. 1 and 5, specifically, the tunnel shuttle platform against wall 30 of the present application includes a control device 303, a winch 304, a cable 302, and a carrying platform 301 that can float on the water. The tunnel shuttle platform against wall 30 is suitable for shuttling and traveling in the water in the tunnel 20 under the shield shaft 10. In this embodiment, it is assumed that the direction of water flow in the tunnel 20 flows from the entrance to the exit, as the arrow F in Figs.1 to 3. Specifically, the control device 303 and the winch 304 are arranged on the shore of the shield shaft 10, the control device 303 is electrically connected to the winch 304, and the carrying platform 301 is electrically connected to the control device 303 through a cable 302.One end of the cable 302 is sealed and fixed to the carrying platform 301, and the other end of the cable 302 is wound on the winch 304. The carrying platform 301 connected with the cable 302 enters the tunnel 20 from the shield shaft 10, and the control device 303 controls the speed of the winch 304 so as to control the retraction or unwinding of the cable 302, as a result, the carrying platform 301 that has entered the entrance of the tunnel 20 shuttles and travels back and forth along the inner wall 201 of the tunnel 20 under the push of the water current and the traction of the cable 302. During the process, the cable 302 is always tight and located in the tunnel 20, so that the control device 303 can adjust the posture of the carrying platform 301 in real time by retracting and unwinding the cable 302 through the winch 304, effectively ensuring that the carrying platform 301 shuttle in the tunnel 20 under a stable posture. Further, the cable 302 in a tight state can accurately measure the specific position of the carrying platform 301 in the tunnel 20. By this token, when the carrying platform 301 of the tunnel shuttle platform against wall 30 of the present application moves downstream (in the direction of arrow F), it's directly pushed by the water flow and pulled down by the cable 302 to move from the entrance of the tunnel 20 to the exit of the tunnel 20 in a stable posture (the pulling traction of the cable 302 is mainly used to overcome the acceleration of the carrying platform 301 during the downstream movement); when the carrying platform 301 moves reversely (namely upstream, the opposite direction of arrow F), it overcomes the resistance of the water flow under the traction of the cable 302 and returns from the exit of the tunnel 20 to the entrance of the tunnel 20, by moving against the inner wall 201 of the tunnel 20 in a stable posture.

By this token, the carrying platform 301 can always maintain a stable posture to shuttle against the inner wall 201 of the tunnel 20 either in the downstream or upstream direction. When the tunnel is full of water, the carrying platform reciprocally shuttles along the top wall of the tunnel, effectively avoiding the risk of collision in the tunnel 20, and ensuring the safe shuttle of the carrying platform 301. At the same time, the carrying platform 301 can be equipped with various monitoring mechanisms for monitoring different working conditions in the tunnel 20, so that these monitoring mechanisms can follow the carrying platform 301 to steadily shuttle back and forth in the tunnel 20 synchronously. In such a way, the working conditions, especially foreign matters in the tunnel 20 can be monitored in real time, thereby ensuring the safe and stable operation of various facilities connected to the tunnel 20. It is worth noting that, the tunnel shuttle platform against wall 30 of the present application is particularly suitable for shuttling and traveling in the tunnel 20 in a nuclear power plant.

Please refer to Fig. 1, in this embodiment, the carrying platform 301 is pushed by the water flow and applied with a force F as illustrated by the arrow in Fig. 1 due to the water flow, causing the carrying platform 301 to move against the inner wall 201 of the tunnel 20. When the carrying platform 301 cannot maintain a stable posture during an acceleration movement, and the monitoring mechanism 40 on the carrying platform 301 cannot monitoring the foreign matters in the tunnel 20 due to the excessively fast speed of the carrying platform 301, the operator may control the speed of the winch 304 to retract or unwind the cable 302 through the control device 303, so as to control the retracting speed of the cable 302, so that the carrying platform 301 is maintained to shuttle against the inner wall 201 of the tunnel 20 at a constant speed, under the combined action of the push of water and the pulling traction of the cable 302.

Please refer to Fig. 1, more specifically, when the control device 303 controls the rolling speed of the winch 304 to control the retracting speed of the cable 302, the carrying platform 301 can float in the tunnel due to the buoyancy itself, and is maintained to shuttle against the top (top wall) of the inner wall 201 of the tunnel 20 at a constant speed, under the combined action of the push of water and the pulling traction of the cable 302. That is, when the tunnel is full of water, the carrying platform 301 may shuttle against the top wall of the tunnel at a constant speed.

Referring to Figs. 1 and 5, the tunnel shuttle platform against wall 30 also includes a walking wheel 305 pivotally connected to the carrying platform 301, and protruded from the carrying platform 301. By means of the walking wheel 305, the carrying platform 301 may roll on the inner wall of the tunnel 20 to achieve the shuttling movement. More specifically, the walking wheel 305 is designed to imitate the inner wall shape of the tunnel 20, so that the walking wheel 305 can better fit the inner wall 201 of the tunnel 20 to move, so that the carrying platform 301 can move against the inner wall 201 of the tunnel 20 in a stable posture.

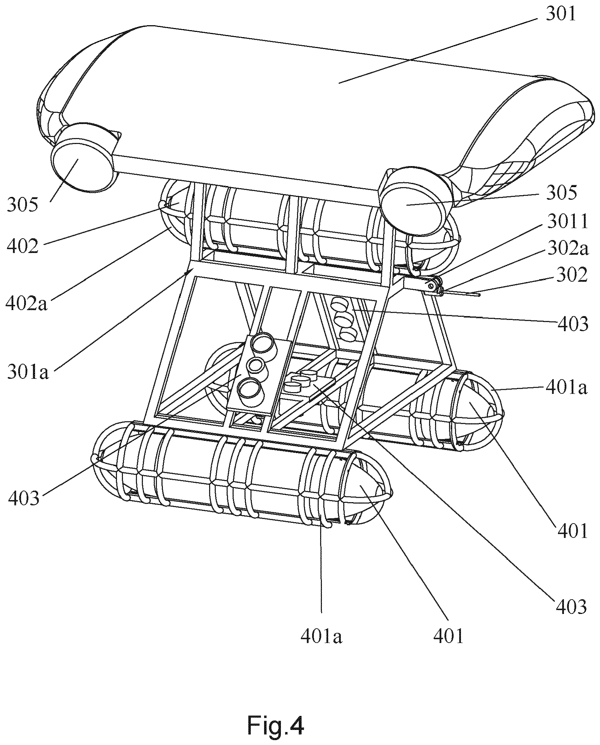

Please refer to Figs. 4 and 5, specifically, the carrying platform 301 is flat and has a hollow structure inside, in such a configuration, the carrying platform 301 has sufficient displacement to provide sufficient buoyancy to float on water. The carrying platform 301 has a curve surface where is close to the inner wall 201 of the tunnel 20, and the curved surface has the same radian with the inner wall of the tunnel 20, and its arc radius is smaller than the radius of the inner wall 201 of the tunnel 20. The walking wheels 305 are pivotally connected in the carrying platform 301, and are protruded from the carrying platform 301, so that there is a certain gap between the carrying platform 301 and the inner wall 201 of the tunnel 20, thereby avoiding friction between the carrying platform 301 and the inner wall 201 of the tunnel 20 to cause damage. Furthermore, the carrying platform 301 is provided a flat and planar surface where is far away from the inner wall 201 of the tunnel 20. Such a planar surface is configured to connect with equipments.

Please refer to Fig. 1. Preferably, in this embodiment, the cable 302 is a buoyant armored cable. The cable 302 can be suspended in the water in the tunnel 20, keeping an approximate stand status in the water. Under the traction of the cable 302 on the carrying platform 301, the carrying platform 301 is maintained in a stable posture when travelling in the tunnel 20. Further, the cable 302 has an optical fiber inside to transmit signals.

Preferably, as shown in Fig. 1, the winch 304 is provided with a measuring device (not shown) for measuring the retracted length of the cable 302. As the carrying platform 301 shuttles in the tunnel 20, the cable 302 is always tight, so the specific position of the carrying platform 301 in the tunnel 20 can be obtained by measuring the retracted length of the cable 302 with the measuring device, and the moving speed of the carrying platform 301 in the tunnel 20 can be also measured by measuring the movement time and the retracted length of the cable 302.

Please refer to Figs. 1 to 3, the tunnel shuttle platform against wall 30 further includes a cable support guide device 306 for supporting the cable 302 and guiding the direction of the cable 302 to prevent the cable 302 from being damaged due to friction and other reasons. The cable support guide device 306 is a detachable tower crane structure and arranged in the shield shaft 10 at the entrance of the tunnel 20, whereby the cable 302 passes through the cable support guide device 306. Specifically, the cable support guide device 306 includes a positioning portion 306a and a suspension portion 306b, wherein the positioning portion 306a is horizontally installed on the shield shaft 10, the suspension portion 306b is hung in the shield shaft 10. The suspension portion 306b is a telescopic structure with multiple sections nested, and the positioning portion 306a and the suspension portion 306b are connected in a bending structure in an L shape. During installation, the positioning portion 306a is joined on the shore instead of the well wall 10a of the shield shaft 10, which is convenient for installation and prevents the well wall 10a from being damaged. After that, the suspension portion 306b is connected with the positioning portion 306a, and the suspension portion 306b is extended. And then, the cable 302 slides through the suspension portion 306 b of the cable support guide device 306.

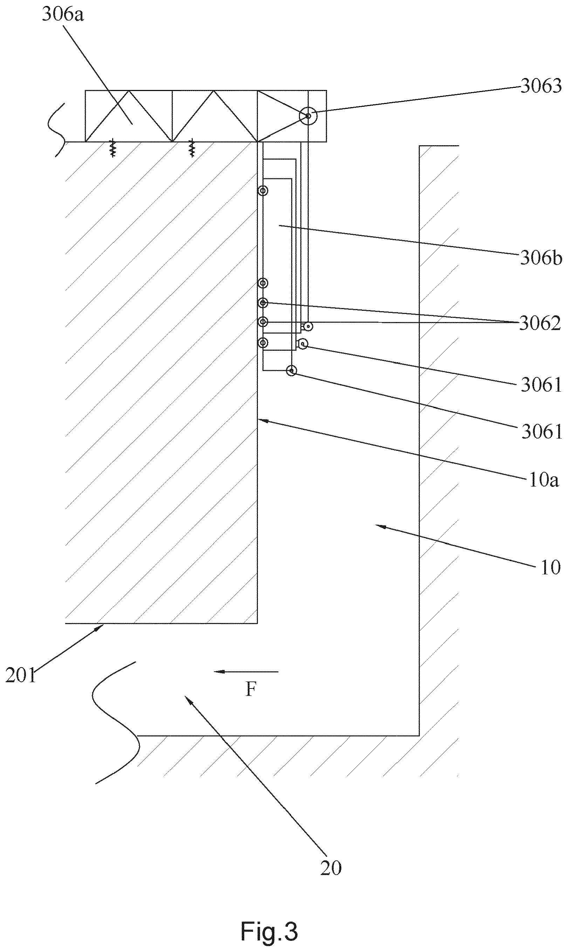

Since the suspension portion 306b is a multi-section nested telescopic structure, thus the suspension portion 306b can be extended during the operation process, causing its lower end to reach the entrance of the tunnel 20 thereby realizing the supporting and guiding for the cable 302. After the operation process is completed, the suspension portion 306b is retracted above the water surface of the tunnel 20 to reduce water corrosion (as shown in Fig. 3), so as to increase the service life of the cable support and guide device 306. Specifically, the suspension portion 306b is provided with a guide wheel 3061 for supporting and guiding the cable 302, the guide 3061 wheel is pivotally connected to the suspension portion 306b, and a limiting guide slot (not shown) is formed on the guide wheel 3061 for the cable 302 to slide through. Due to the limiting guide slot, the position of the cable 302 can be limited, which avoids the cable 302 from shaking or deviating from track when the cable 302 moves, making the platform 30 move in the tunnel 20 more stable. Further, the guide wheel 3061 of the suspension portion 306a in the shield shaft 10 is arranged on one side of the suspension portion 306a and protruded from the suspension portion 306a.

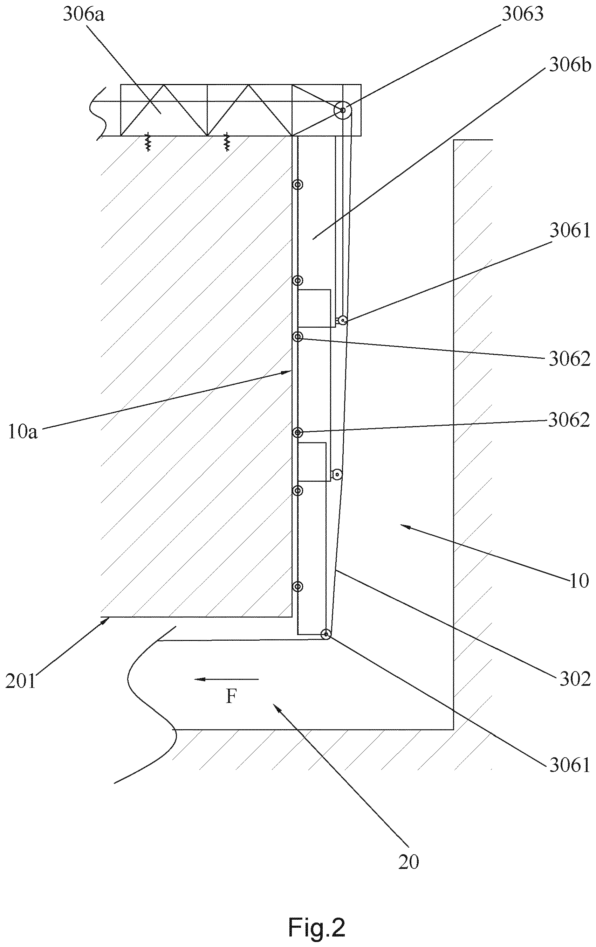

Continuing to refer to Figs. 1 to 3, the suspension portion 306b is further pivotally connected with a support wheel 3062, and the support wheel 3062 and the guide wheel 3061 are located at two opposite sides of the suspension portion 306b (as shown in Fig. 2). The suspension portion 306b is hung in the shield shaft 10 by means of the contact between the support wheel 3062 and the well wall 10a of the shield shaft 10. The support wheel 3062 can provide a sliding support to prevent the suspension portion 306b from generating a driving force to cause the suspension portion 306b to move towards the well wall 10a. In such a way, the friction between the suspension portion 306b and the well wall 10a of the shield shaft 10 is reduced, thereby effectively protecting the suspension portion 306b and the shield shaft 10.

Continuing to refer to Figs. 1 to 3, preferably, a guide wheel 3063 for supporting and guiding the cable 302 is pivotally connected to the positioning portion 306a, and the guide wheel 3063 is also provided with a limit guide slot (not shown) for the cable 302 to slide through. In such a configuration, the movement position of the cable 302 can be restricted, which prevents the cable 302 from deviating when it moves, and ensures the stable movement of the platform 30. It is worth noting that, in order to facilitate manufacturing and installation, the structure, material and size of the guide wheel 3061 and the guide wheel 3063 in this application are exactly the same.

Please refer to Figs. 1, 4 and 5, specifically, the monitoring mechanism 40 is disposed in the carrying platform 301 and is electrically connected to the cable 302. The monitoring mechanism 40 can be electrically connected to the control device 303 through the cable 302. Specifically, the monitoring mechanism 40 is connected to the carrying platform 301 and protruded from the carrying platform 301.

Continuing to refer to Figures 1, 4 and 5, the tunnel monitoring device 100 includes a frame support 301a that is an inverted "Y" shape and connected to the carrying platform 301. Specifically, the frame support 301a is connected to a surface, where is far away from the inner wall 201 of the tunnel 20, (namely the planar surface mentioned above) of the carrying platform 301, so that the monitoring mechanism 40 is carried on the frame support 301a, and also protruded from the carrying platform 301.

Continuing to refer to Figs. 1, 4 and 5, the monitoring mechanism 40 is electrically connected to the cable 302, and the cable 302 is specifically fixed to the middle of the frame support 301a. In this embodiment, a cable fixing interface 3011 is formed at the middle of the frame support 301a, and a cable connector 302a is connected at one end of the cable 302, by means of the cable fixing interface 3011 and the cable connector 302a, the frame support 301a and the cable 302 can be fixed together. As a result, the retracted length and speed of the cable 302 can be controlled to obtain the moving speed and the position of the carrying platform 301 in the tunnel 20. More specifically, in this embodiment, the cable fixing interface 3011 is a pin shaft. Of course, the shape and connection mode of the cable fixing interface 3011 and the cable connector 302a may be changed according to actual measurement needs and the material of the cable 302, for example.

As shown in Figs. 4 and 5, the monitoring mechanism 40 includes a power module 401, a control module 402 and a monitoring assembly 403 that are electrically connected with the power module 401, respectively. The power module 401 is mounted on a bottom of the frame support 301a, the control module 402 is mounted at a middle of the frame support 301a, and the monitoring assembly 403 is mounted on the frame support 301a. In a preferable embodiment, multiple monitoring assemblies 403 are evenly distributed on the frame support 301a, multiple power modules 401 are installed symmetrically on two ends of the bottom of the frame support 301a. Of course, the number of the power module 401, the control module 402 and the monitoring assembly 403 can be changed accordingly the actual demands.

As shown in Fig. 4, the tunnel monitoring device 100 further includes a power module protective shell 401a which is hollow and connected at two ends of the frame support 301a to receive the power module 401. The hollow power module protective shell 401a allows water to pass through when it shuttles in the water, effectively reducing the resistance to water. And the symmetrical arrangement of two power module protective shells 401a may further improve the posture stability.

As shown in Fig. 4, the tunnel monitoring device 100 further includes a control module protective shell 402a which is hollow and connected at the middle of the frame support 301a to receive the control module 402. Similarly, the hollow control module protective shell 402a allows water to pass through when it shuttles in the water, effectively reducing the resistance to water. In order to facilitate manufacturing and installation, the power module protective shell 401a and the control module protective shell 402a are made of engineering plastics and have the same structure.

Continuing to refer to Figure 4, specifically, each monitoring assembly 403 includes sonar, imaging equipment, and underwater lights (not shown). In Fig. 4, the sonar, the imaging equipment, and the underwater lights are packaged together; of course, other components also can be packaged in the monitoring assembly 403 for monitoring other conditions in the tunnel 20. In this embodiment, the monitoring assembly 403 is mainly used to monitor the condition of foreign matters in the water-filled tunnel 20. More specifically, the specific position of the foreign matters in the tunnel 20 may be determined by the sonar, the specific types of foreign matters may be captured by the imaging equipment, and the underwater lights may provide a good environment for imaging equipment to determine the foreign matters that will be cleaned up subsequently, which ensures the safe and stable operation of various facilities connected to the tunnel 20.

As shown in Fig. 4 again, more specifically, the control module 402 can receive the signal transmitted by the control device 303 on the shore of the shield shaft 10 through the cable 302 to control the monitoring assembly 403 to monitor the working conditions in the tunnel 20, especially monitor the foreign matters in the tunnel 20. At the same time, the control module 402 also feeds back information received by the monitoring assembly 403 to the control device 303 on the shore through the cable 302.

Please refer to Figs. 1 to 5, the specific operation mode of the tunnel monitoring device 100 follows. Firstly, the control device 303 and the winch 304 are installed on the shore of the shield shaft 10, the cable support guide device 306 is installed in the shield shaft 10, the walking wheel 305 is pivotally connected to the carrying platform 301, and the frame support 301a is installed on the carrying platform 301. And then, the monitoring mechanism 40 is carried on the frame support 301a, one end of the cable 302 is connected to the carrying platform 301, and the other end of the cable 302 is wound on the winch 304. The carrying platform 301 carrying the monitoring mechanism 40 enters the tunnel 20 from the shield shaft 10, and the control device 303 controls the speed of the winch 304 to retract the cable 302 so as to make the cable 302 in a tight state, at this time, the carrying platform 301 is floated on the water-filled tunnel by means of its own buoyancy and moves against the top wall of the tunnel. By controlling the retraction of the cable 302, the carrying platform 301 moves along the top of the inner wall 201 (that is the top wall) of the tunnel, from the entrance of the tunnel 20 to the exit of the tunnel 20 (that is the arrow F), at a constant speed. When the carrying platform 301 returns from the exit of the tunnel 20 to the entrance of the tunnel 20 (that is, the opposite direction of arrow F), the control device 303 controls the rolling speed of the winch 304 to retract the cable 302 so that the carrying platform 301 overcomes the resistance of the water flow and moves along the top of the inner wall 201 of the tunnel 20 at a constant speed. In such a way, the carrying platform 301 can shuttle and travel in the tunnel 20 in a reciprocating motion, and during the entire shuttling process, the monitoring mechanism 40 can monitor the situation in the tunnel 20 to determine whether there are foreign matters in the tunnel 20. When foreign matters are found, and the specific location thereof can be determined by measuring the distance/length of the tight cable 302.

As shown in Figs. 1 to 5, when the carrying platform 301 of the tunnel shuttle platform against wall 30 of the present application moves downstream (in the direction of arrow F), it's directly pushed by the water flow and pulled down by the cable 302 to move from the entrance of the tunnel 20 to the exit of the tunnel 20 at a constant speed; when the carrying platform 301 moves reversely (namely upstream, in the opposite direction of arrow F), it overcomes the resistance of the water flow under the retraction of the cable 302 and returns from the exit of the tunnel 20 to the entrance of the tunnel 20. By repeating the above process, the carrying platform 301 can shuttle in the tunnel in a reciprocating motion. When the control device 303 controls the rolling speed of the winch 304 to control the retracting and the unwinding of the cable 302, the carrying platform 301 can float in the tunnel due to the buoyancy itself, and is maintained to shuttle against the top of the inner wall 201 of the tunnel 20 at a constant speed, under the combined action of the push of water and the pulling traction of the cable 302. Therefore, a safe shuttle of the carrying platform 301 is ensured, as the risk of collision in the tunnel 20 is avoided.

At the same time, the carrying platform 301 can be loaded with various monitoring mechanisms to monitor the working conditions in the tunnel 20, so that these monitoring mechanisms 40 can be synchronized with the carrying platform 301 to shuttle stably in the tunnel 20, so as to monitor the working conditions in the tunnel 20 in real time, especially monitor the foreign matters in the tunnel 20, thereby ensuring the safe and stable operation of various facilities connected to the tunnel 20. In addition, the carrying platform 301 that can be floated on the water can shuttle and travel along the inner wall of the tunnel, by the push of the water current and the traction of the cable 302, without a self-provided power, which effectively solves the technical defects of bulkiness, poor endurance, unstable attitude and difficult maintenance of the existing monitoring equipment that requires electric power to shuttle.

It is worth noting that, the tunnel shuttle platform against wall 30 and the carrying platform 301 in the tunnel monitoring device 100 according to the present application can shuttle back and forth in any tunnel 20 with water, which is not only applicable to the tunnel 20 in the nuclear power plant mentioned above, but also applicable to other water tunnels such as culverts, waterways.

## Claims

1. A tunnel shuttle platform against wall (30), adapted for shuttling in water in a tunnel (20) below a shield shaft (10), wherein the platform (30) comprises a control device (303), a winch (304), a cable (302), and a carrying platform (301) capable of floating on water, the control device (303) is electrically connected with the winch (304), the carrying platform (301) is electrically connected with the control device (303) via the cable (302), one end of the cable (302) is connected to the carrying platform (301), and another end of the cable (302) is wound onto the winch (304), and the cable (302) is controlled to release or retract by the control device such that the carrying platform (301) can shuttle against an inner wall (201) of the tunnel (20) in a reciprocating motion;
wherein the tunnel shuttle platform further comprises a cable support guide device (306) comprising a positioning portion (306a) and a suspension portion (306b) that are connected to form an L-shaped structure,
wherein the cable (302) is arranged to slidably pass through the suspension portion (306b), and wherein the suspension portion (306b) is provided with a guide wheel (3061) for supporting and guiding the cable (302);
**characterized in that**:
the tunnel shuttle platform further comprises a support wheel (3062) pivotally connected to the suspension portion (306b), wherein the support wheel (3062) and the guide wheel (3061) are configured at two opposite sides of the suspension portion (306b), and wherein the suspension portion (306b) is configured to hang in the shield shaft (10) by virtue of contact between the support wheel (3026) and a well wall (10a) of the shield shaft (10).

2. The tunnel shuttle platform against wall according to claim 1, wherein the cable (302) is controlled to release or retract by the control device such that the carrying platform (301) can shuttle against the inner wall (201) of the tunnel (20) in a reciprocating motion, at a constant speed.

3. The tunnel shuttle platform against wall according to claim 2, wherein the cable (302) is controlled to release or retract by the control device such that the carrying platform (301) can shuttle against a top of the inner wall (201) of the tunnel (20) in a reciprocating motion, at a constant speed.

4. The tunnel shuttle platform against wall according to claim 1, further comprising a walking wheel (305) pivotally connected to the carrying platform (301), whereby the walking wheel (305) rolls on the inner wall (201) of the tunnel (20) such that the carrying platform (301) shuttles in the tunnel (20) in a reciprocating motion.

5. The tunnel shuttle platform against wall according to claim 1, wherein the cable support guide device (306) is detachable.

6. The tunnel shuttle platform against wall according to claim 1, wherein the suspension portion (306b) is a telescopic structure with multiple sections nested.

7. The tunnel shuttle platform against wall according to claim 1, wherein the guide wheel (3061) is provided with a limiting guide slot for the cable (302).

8. The tunnel shuttle platform against wall according to claim 7, wherein the guide wheel (3061) is pivotally connected to the suspension portion (306b).

9. The tunnel shuttle platform against wall according to claim 8, wherein the guide wheel (3061) is protruded from one side of the suspension portion (306b).

10. The tunnel shuttle platform against wall according to claim 1, wherein the positioning portion (306a) is provided with a second guide wheel (3063) for supporting and guiding the cable (302), and the second guide wheel (3063) is provided with a limiting guide slot for the cable (302).

11. The tunnel shuttle platform against wall according to claim 1, wherein the cable (302) is a buoyancy armored cable.

12. The tunnel shuttle platform against wall according to claim 11, wherein the cable (302) is capable of suspending in water.

13. The tunnel shuttle platform against wall according to claim 11, wherein an optical fiber is configured inside the cable (302) for signal transmission.

14. The tunnel shuttle platform against wall according to claim 1, wherein the winch (304) is provided with a measuring device for measuring a retracted length of the cable (302) to determine a position of the carrying platform (301).

15. A tunnel monitoring apparatus (100) comprising the tunnel shuttle platform against wall (30) according to any one of claims 1-14 and a monitoring mechanism (40) for monitoring the foreign matters, the monitoring mechanism (40) is supported by the carrying platform (301) of the tunnel shuttle platform against wall (30), and the monitoring mechanism (40) is electrically connected with the control device (303) via the cable (32).

16. The tunnel monitoring apparatus according to claim 15, wherein the monitoring mechanism (40) is connected to and protruded from the carrying platform (301).

17. The tunnel monitoring apparatus according to claim 16, further comprising a frame support (301a) connected to and protruded from the carrying platform (301), and the monitoring mechanism (40) is supported on the frame support (301a).

18. The tunnel monitoring apparatus according to claim 17, wherein the frame support (301a) is an inverted Y shape structure.

19. The tunnel monitoring apparatus according to claim 17, wherein the frame support (301a) is a frame structure.

20. The tunnel monitoring apparatus according to claim 17, wherein the cable (302) is fixed on a middle of the frame support (301a).

21. The tunnel monitoring apparatus according to claim 15, wherein the carrying platform (301) is flat.

22. The tunnel monitoring apparatus according to claim 21, wherein the carrying platform (301) has a hollow structure inside.

23. The tunnel monitoring apparatus according to claim 15, wherein the carrying platform (301) has a curved surface where is close to the top of the inner wall (201) of the tunnel (20).

24. The tunnel monitoring apparatus according to claim 23, wherein the curved surface has a same radian with the top of the inner wall (201) of the tunnel (20).

25. The tunnel monitoring apparatus according to claim 23, wherein the curved surface has a radius smaller than that of the inner wall (201) of the tunnel (20).

26. The tunnel monitoring apparatus according to claim 17, wherein the carrying platform (301) has a flat surface where is far away from the top of the inner wall (201) of the tunnel (20), and the flat surface is connected to the frame support (301a).

27. The tunnel monitoring apparatus according to claim 17, wherein the monitoring mechanism (40) comprises a power module (401), a control module (402) and a monitoring assembly (403) that are electrically connected with the power module (401), the power module (401) is mounted on a bottom of the frame support (301a), the control module (402) is mounted on a middle of the frame support (301a), and the monitoring assembly (403) is mounted on the frame support (301a).

28. The tunnel monitoring apparatus according to claim 27, wherein multiple monitoring assemblies (403) are uniformly distributed on the frame support (301a).

29. The tunnel monitoring apparatus according to claim 27, wherein two power modules (401) are symmetrically mounted at two ends of the bottom of the frame support (301a).

30. The tunnel monitoring apparatus according to claim 29, further comprising two power module protective shells (401a) in which the power modules (401) are configured, respectively, and the two power module protective shells (401a) are connected at two ends of the bottom of the frame support (301a), respectively.

31. The tunnel monitoring apparatus according to claim 30, wherein each of the power module protective shells (401a) is a hollow structure.

32. The tunnel monitoring apparatus according to claim 27, further comprising a control module protective shell (402a) in which the control module (402) is configured, and the control module protective shell (402a) is connected at a middle of the frame support (301a).

33. The tunnel monitoring apparatus according to claim 32, wherein the control module protective shell (402a) is a hollow structure.

34. The tunnel monitoring apparatus according to claim 27, wherein the control module (402) is communicated with the control device (303) and configured to receive a signal from the control device (303) via the cable (302) thereby monitoring actions of the monitoring assembly (403).

35. The tunnel monitoring apparatus according to claim 27, wherein the monitoring assembly (403) comprises sonar, imaging equipment, and underwater lights.

## Patentansprüche

1. Tunnelshuttleplattform an einer Wand (30), ausgelegt zur Hin- und Herbewegung in Wasser in einem Tunnel (20) unterhalb eines Schildschachts (10), wobei die Plattform (30) eine Steuervorrichtung (303), eine Winde (304), ein Kabel (302) und eine Trägerplattform (301) umfasst, die dazu in der Lage ist, auf Wasser zu schwimmen, wobei die Steuervorrichtung (303) elektrisch mit der Winde (304) verbunden ist, wobei die Trägerplattform (301) über das Kabel (302) elektrisch mit der Steuervorrichtung (303) verbunden ist, wobei ein Ende des Kabels (302) mit der Trägerplattform (301) verbunden ist, und das andere Ende des Kabels (302) auf die Winde (304) gewickelt ist, und wobei das Kabel (302) durch die Steuervorrichtung gesteuert wird, um auf- oder abgewickelt zu werden, sodass die Trägerplattform (301) in einer Hin- und Her-Bewegung an einer Innenwand (201) des Tunnels (20) hin- und herfahren kann;
wobei die Tunnelshuttleplattform ferner eine Kabelträgerführungsvorrichtung (306) umfasst, die einen Positionierungsabschnitt (306a) und einen Aufhängungsabschnitt (306b) umfasst, die verbunden sind, um eine L-förmige Struktur zu bilden,
wobei das Kabel (302) angeordnet ist, um gleitend durch den Aufhängungsabschnitt (306b) hindurchgeführt zu werden, und wobei der Aufhängungsabschnitt (306b) mit einem Führungsrad (3061) zum Tragen und Führen des Kabels (302) bereitgestellt ist;
**dadurch gekennzeichnet, dass**:
die Tunnelshuttleplattform ferner ein Trägerrad (3062) umfasst, das schwenkbar mit dem Aufhängungsabschnitt (306b) verbunden ist, wobei das Trägerrad (3062) und das Führungsrad (3061) an zwei entgegengesetzten Seiten des Aufhängungsabschnitts (306b) konfiguriert sind, und wobei der Aufhängungsabschnitt (306b) konfiguriert ist, um durch den Kontakt zwischen dem Trägerrad (3026) und einer Schachtwand (10a) des Schildschachts (10) in dem Schildschacht (10) zu hängen.

2. Tunnelshuttleplattform an einer Wand nach Anspruch 1, wobei das Kabel (302) durch die Steuervorrichtung gesteuert wird, um auf- oder abgewickelt zu werden, sodass sich die Trägerplattform (301) in einer Hin- und Her-Bewegung mit einer konstanten Geschwindigkeit an der Innenwand (201) des Tunnels (20) hin- und herfahren kann.

3. Tunnelshuttleplattform an einer Wand nach Anspruch 2, wobei das Kabel (302) durch die Steuervorrichtung gesteuert wird, um auf- oder abgewickelt zu werden, sodass die Trägerplattform (301) in einer Hin- und Her-Bewegung mit einer konstanten Geschwindigkeit an einer Oberseite der Innenwand (201) des Tunnels (20) hin- und herfahren kann.

4. Tunnelshuttleplattform an einer Wand nach Anspruch 1, die ferner ein Laufrad (305) umfasst, das schwenkbar mit der Trägerplattform (301) verbunden ist, wodurch das Laufrad (305) auf der Innenwand (201) des Tunnels (20) so rollt, dass die Trägerplattform (301) in einer Hin- und Her-Bewegung in dem Tunnel (20) hin- und herfährt.

5. Tunnelshuttleplattform an einer Wand nach Anspruch 1, wobei die Kabelträgerführungsvorrichtung (306) abnehmbar ist.

6. Tunnelshuttleplattform an einer Wand nach Anspruch 1, wobei der Aufhängungsabschnitt (306b) eine teleskopische Struktur mit mehreren ineinander gelagerten Abschnitten ist.

7. Tunnelshuttleplattform an einer Wand nach Anspruch 1, wobei das Führungsrad (3061) mit einem begrenzenden Führungsschlitz für das Kabel (302) bereitgestellt ist.

8. Tunnelshuttleplattform an einer Wand nach Anspruch 7, wobei das Führungsrad (3061) schwenkbar mit dem Aufhängungsabschnitt (306b) verbunden ist.

9. Tunnelshuttleplattform an einer Wand nach Anspruch 8, wobei das Führungsrad (3061) von einer Seite des Aufhängungsabschnitts (306b) hervorsteht.

10. Tunnelshuttleplattform an einer Wand nach Anspruch 1, wobei der Positionierungsabschnitt (306a) mit einem zweiten Führungsrad (3063) zum Tragen und Führen des Kabels (302) bereitgestellt ist, und das zweite Führungsrad (3063) mit einem begrenzenden Führungsschlitz für das Kabel (302) bereitgestellt ist.

11. Tunnelshuttleplattform an einer Wand nach Anspruch 1, wobei das Kabel (302) ein mit einer Auftriebshilfe versehenes Kabel ist.

12. Tunnelshuttleplattform an einer Wand nach Anspruch 11, wobei das Kabel (302) dazu in der Lage ist, im Wasser zu treiben.

13. Tunnelshuttleplattform an einer Wand nach Anspruch 11, wobei eine optische Faser im Inneren des Kabels (302) für eine Signalübertragung konfiguriert ist.

14. Tunnelshuttleplattform an einer Wand nach Anspruch 1, wobei die Winde (304) mit einer Messvorrichtung zum Messen einer aufgewickelten Länge des Kabels (302) bereitgestellt ist, um eine Position der Trägerplattform (301) zu bestimmen.

15. Tunnelüberwachungsvorrichtung (100), umfassend eine Tunnelshuttleplattform an einer Wand (30) nach einem der Ansprüche 1 bis 14 und einen Überwachungsmechanismus (40) zum Überwachen von Fremdmaterial, wobei der Überwachungsmechanismus (40) durch die Trägerplattform (301) der Tunnelshuttleplattform an der Wand (30) gelagert wird, und wobei der Überwachungsmechanismus (40) über das Kabel (32) elektrisch mit der Steuervorrichtung (303) verbunden ist.

16. Tunnelüberwachungsvorrichtung nach Anspruch 15, wobei der Überwachungsmechanismus (40) mit der Trägerplattform (301) verbunden ist und davon hervorsteht.

17. Tunnelüberwachungsvorrichtung nach Anspruch 16, die ferner einen Rahmenträger (301a) umfasst, der mit der Trägerplattform (301) verbunden ist und davon hervorsteht, und wobei der Überwachungsmechanismus (40) auf dem Rahmenträger (301a) getragen wird.

18. Tunnelüberwachungsvorrichtung nach Anspruch 17, wobei der Rahmenträger (301a) eine Struktur in Form eines umgedrehten Y ist.

19. Tunnelüberwachungsvorrichtung nach Anspruch 17, wobei der Rahmenträger (301a) eine Rahmenstruktur ist.

20. Tunnelüberwachungsvorrichtung nach Anspruch 17, wobei das Kabel (302) in einer Mitte des Rahmenträgers (301a) befestigt ist.

21. Tunnelüberwachungsvorrichtung nach Anspruch 15, wobei die Trägerplattform (301) flach ist.

22. Tunnelüberwachungsvorrichtung nach Anspruch 21, wobei die Trägerplattform (301) innen eine Hohlstruktur aufweist.

23. Tunnelüberwachungsvorrichtung nach Anspruch 15, wobei die Trägerplattform (301) eine gekrümmte Oberfläche aufweist, wo sie sich nahe der Oberseite der Innenwand (201) des Tunnels (20) befindet.

24. Tunnelüberwachungsvorrichtung nach Anspruch 23, wobei die gekrümmte Oberfläche denselben Radiant aufweist wie die Oberseite der Innenwand (201) des Tunnels (20).

25. Tunnelüberwachungsvorrichtung nach Anspruch 23, wobei die gekrümmte Oberfläche einen Radius aufweist, der kleiner ist als jener der Innenwand (201) des Tunnels (20).

26. Tunnelüberwachungsvorrichtung nach Anspruch 17, wobei die Trägerplattform (301) eine flache Oberfläche aufweist, wo sie sich weit weg von der Oberseite der Innenwand (201) des Tunnels (20) befindet, und wobei die flache Oberfläche mit dem Rahmenträger (301a) verbunden ist.

27. Tunnelüberwachungsvorrichtung nach Anspruch 17, wobei der Überwachungsmechanismus (40) ein Leistungsmodul (401), ein Steuermodul (402) und eine Überwachungsanordnung (403) umfasst, die elektrisch mit dem Leistungsmodul (401) verbunden sind, wobei das Leistungsmodul (401) auf einer Unterseite des Rahmenträgers (301a) befestigt ist, wobei das Steuermodul (402) in einer Mitte des Rahmenträgers (301a) befestigt ist, und wobei die Überwachungsanordnung (403) auf dem Rahmenträger (301a) befestigt ist.

28. Tunnelüberwachungsvorrichtung nach Anspruch 27, wobei mehrere Überwachungsanordnungen (403) gleichmäßig auf dem Rahmenträger (301a) verteilt sind.

29. Tunnelüberwachungsvorrichtung nach Anspruch 27, wobei zwei Leistungsmodule (401) symmetrisch an zwei Enden der Unterseite des Rahmenträgers (301a) befestigt sind.

30. Tunnelüberwachungsvorrichtung nach Anspruch 29, ferner umfassend zwei Leistungsmodul-Schutzhüllen (401a), in denen die Leistungsmodule (401) jeweils konfiguriert sind, und wobei die zwei Leistungsmodul-Schutzhüllen (401a) jeweils an zwei Enden der Unterseite des Rahmenträgers (301a) befestigt sind.

31. Tunnelüberwachungsvorrichtung nach Anspruch 30, wobei jede der Leistungsmodul-Schutzhüllen (401a) eine Hohlstruktur ist.

32. Tunnelüberwachungsvorrichtung nach Anspruch 27, ferner umfassend eine Steuermodul-Schutzhülle (402a), in der das Steuermodul (402) konfiguriert ist, und wobei die Steuermodul-Schutzhülle (402a) in der Mitte des Rahmenträgers (301a) verbunden ist.

33. Tunnelüberwachungsvorrichtung nach Anspruch 32, wobei die Steuermodul-Schutzhülle (402a) eine Hohlstruktur ist.

34. Tunnelüberwachungsvorrichtung nach Anspruch 27, wobei das Steuermodul (402) mit der Steuervorrichtung (303) in Kommunikation steht und konfiguriert ist, um über das Kabel (302) ein Signal von der Steuervorrichtung (303) zu empfangen, wodurch Aktionen der Überwachungsanordnung (403) überwacht werden.

35. Tunnelüberwachungsvorrichtung nach Anspruch 27, wobei die Überwachungsanordnung (403) ein Echolot, bildgebende Ausrüstung und Unterwasserlichter umfasst.

## Revendications

1. Plate-forme navette de tunnel contre paroi (30), adaptée pour effectuer la navette dans l'eau dans un tunnel (20) en dessous d'un puits de protection (10), dans laquelle la plate-forme (30) comprend un dispositif de commande (303), un treuil (304), un câble (302) et une plate-forme de transport (301) capable de flotter sur l'eau, le dispositif de commande (303) est connecté électriquement au treuil (304), la plate-forme de transport (301) est connectée électriquement au dispositif de commande (303) via le câble (302), une extrémité du câble (302) est reliée à la plate-forme de transport (301), et une autre extrémité du câble (302) est enroulée sur le treuil (304), et le câble (302) est commandé pour se relâcher ou se rétracter à l'aide du dispositif de commande de telle sorte que la plate-forme de transport (301) peut faire la navette contre une paroi interne (201) du tunnel (20) dans un mouvement de va-et-vient ;
dans laquelle la plate-forme navette de tunnel comprend en outre un dispositif de guidage de support de câble (306) comprenant une partie de positionnement (306a) et une partie de suspension (306b) qui sont reliées pour former une structure en 1,
dans laquelle le câble (302) est agencé pour passer de manière coulissante à travers la partie de suspension (306b), et dans laquelle la partie de suspension (306b) est pourvue d'une roue de guidage (3061) pour supporter et guider le câble (302) ;
**caractérisée en ce que** :
la plate-forme navette de tunnel comprend en outre une roue de support (3062) reliée de façon pivotante à la partie de suspension (306b), dans laquelle la roue de support (3062) et la roue de guidage (3061) sont configurées au niveau de deux côtés opposés de la partie de suspension (306b), et dans laquelle la partie de suspension (306b) est configurée pour être accrochée dans le puits de protection (10) grâce à un contact entre la roue de support (3026) et une paroi de puits (10a) du puits de protection (10).

2. Plate-forme navette de tunnel contre paroi selon la revendication 1, dans laquelle le câble (302) est commandé pour se relâcher ou se rétracter à l'aide du dispositif de commande de telle sorte que la plate-forme de transport (301) peut faire la navette contre la paroi interne (201) du tunnel (20) dans un mouvement de va-et-vient, à une vitesse constante.

3. Plate-forme navette de tunnel contre paroi selon la revendication 2, dans laquelle le câble (302) est commandé pour se relâcher ou se rétracter à l'aide du dispositif de commande de telle sorte que la plate-forme de transport (301) peut faire la navette contre une partie supérieure de la paroi interne (201) du tunnel (20) dans un mouvement de va-et-vient, à une vitesse constante.

4. Plate-forme navette de tunnel contre paroi selon la revendication 1, comprenant en outre une roue de déplacement (305) reliée de façon pivotante à la plate-forme de transport (301), moyennant quoi la roue de déplacement (305) roule sur la paroi interne (201) du tunnel (20) de telle sorte que la plate-forme de transport (301) fait la navette dans le tunnel (20) dans un mouvement de va-et-vient.

5. Plate-forme navette de tunnel contre paroi selon la revendication 1, dans laquelle le dispositif de guidage de support de câble (306) est détachable.

6. Plate-forme navette de tunnel contre paroi selon la revendication 1, dans laquelle la partie de suspension (306b) est une structure télescopique avec de multiples sections emboîtées.

7. Plate-forme navette de tunnel contre paroi selon la revendication 1, dans laquelle la roue de guidage (3061) est pourvue d'une fente de guidage de limitation pour le câble (302) .

8. Plate-forme navette de tunnel contre paroi selon la revendication 7, dans laquelle la roue de guidage (3061) est reliée de façon pivotante à la partie de suspension (306b).

9. Plate-forme navette de tunnel contre paroi selon la revendication 8, dans laquelle la roue de guidage (3061) fait saillie depuis un côté de la partie de suspension (306b).

10. Plate-forme navette de tunnel contre paroi selon la revendication 1, dans laquelle la partie de positionnement (306a) est pourvue d'une deuxième roue de guidage (3063) pour supporter et guider le câble (302), et la deuxième roue de guidage (3063) est pourvue d'une fente de guidage de limitation pour le câble (302).

11. Plate-forme navette de tunnel contre paroi selon la revendication 1, dans laquelle le câble (302) est un câble flottant blindé.

12. Plate-forme navette de tunnel contre paroi selon la revendication 11, dans laquelle le câble (302) est capable d'être en suspension dans l'eau.

13. Plate-forme navette de tunnel contre paroi selon la revendication 11, dans laquelle une fibre optique est configurée à l'intérieur du câble (302) pour une transmission de signal.

14. Plate-forme navette de tunnel contre paroi selon la revendication 1, dans laquelle le treuil (304) est pourvu d'un dispositif de mesure pour mesurer une longueur rétractée du câble (302) pour déterminer une position de la plate-forme de transport (301).

15. Appareil de surveillance de tunnel (100) comprenant la plate-forme navette de tunnel contre paroi (30) selon l'une quelconque des revendications 1 à 14 et un mécanisme de surveillance (40) pour surveiller les matières étrangères, le mécanisme de surveillance (40) est supporté par la plate-forme de transport (301) de la plate-forme navette de tunnel contre paroi (30), et le mécanisme de surveillance (40) est connecté électriquement au dispositif de commande (303) via le câble (32).

16. Appareil de surveillance de tunnel selon la revendication 15, dans lequel le mécanisme de surveillance (40) est relié à la plate-forme de transport (301) et fait saillie depuis celle-ci.

17. Appareil de surveillance de tunnel selon la revendication 16, comprenant en outre un support de cadre (301a) relié à la plate-forme de transport (301) et faisant saillie depuis celle-ci, et le mécanisme de surveillance (40) est supporté sur le support de cadre (301a).

18. Appareil de surveillance de tunnel selon la revendication 17, dans lequel le support de cadre (301a) est une structure en forme de Y inversé.

19. Appareil de surveillance de tunnel selon la revendication 17, dans lequel le support de cadre (301a) est une structure de cadre.

20. Appareil de surveillance de tunnel selon la revendication 17, dans lequel le câble (302) est fixé sur un centre du support de cadre (301a).

21. Appareil de surveillance de tunnel selon la revendication 15, dans lequel la plate-forme de transport (301) est plane.

22. Appareil de surveillance de tunnel selon la revendication 21, dans lequel la plate-forme de transport (301) a une structure creuse à l'intérieur.

23. Appareil de surveillance de tunnel selon la revendication 15, dans lequel la plate-forme de transport (301) a une surface incurvée qui est proche de la partie supérieure de la paroi interne (201) du tunnel (20).

24. Appareil de surveillance de tunnel selon la revendication 23, dans lequel la surface incurvée a un même radian que la partie supérieure de la paroi interne (201) du tunnel (20).

25. Appareil de surveillance de tunnel selon la revendication 23, dans lequel la surface incurvée a un rayon inférieur à celui de la paroi interne (201) du tunnel (20).

26. Appareil de surveillance de tunnel selon la revendication 17, dans lequel la plate-forme de transport (301) a une surface plane qui est éloignée de la partie supérieure de la paroi interne (201) du tunnel (20), et la surface plane est reliée au support de cadre (301a).

27. Appareil de surveillance de tunnel selon la revendication 17, dans lequel le mécanisme de surveillance (40) comprend un module de puissance (401), un module de commande (402) et un ensemble de surveillance (403) qui sont connectés électriquement au module de puissance (401), le module de puissance (401) est monté sur une partie inférieure du support de cadre (301a), le module de commande (402) est monté sur un centre du support de cadre (301a), et l'ensemble de surveillance (403) est monté sur le support de cadre (301a).

28. Appareil de surveillance de tunnel selon la revendication 27, dans lequel des ensembles de surveillance multiples (403) sont répartis uniformément sur le support de cadre (301a).

29. Appareil de surveillance de tunnel selon la revendication 27, dans lequel deux modules de puissance (401) sont montés de manière symétrique aux deux extrémités de la partie inférieure du support de cadre (301a).

30. Appareil de surveillance de tunnel selon la revendication 29, comprenant en outre deux coques de protection de module de puissance (401a) dans lesquelles les modules de puissance (401) sont configurés, respectivement, et les deux coques de protection de module de puissance (401a) sont reliées aux deux extrémités de la partie inférieure du support de cadre (301a), respectivement.

31. Appareil de surveillance de tunnel selon la revendication 30, dans lequel chacune des coques de protection de module de puissance (401a) est une structure creuse.

32. Appareil de surveillance de tunnel selon la revendication 27, comprenant en outre une coque de protection de module de commande (402a) dans laquelle le module de commande (402) est configuré, et la coque de protection de module de commande (402a) est reliée à un centre du support de cadre (301a).

33. Appareil de surveillance de tunnel selon la revendication 32, dans lequel la coque de protection de module de commande (402a) est une structure creuse.

34. Appareil de surveillance de tunnel selon la revendication 27, dans lequel le module de commande (402) est en communication avec le dispositif de commande (303) et configuré pour recevoir un signal du dispositif de commande (303) via le câble (302), surveillant ainsi des actions de l'ensemble de surveillance (403).

35. Appareil de surveillance de tunnel selon la revendication 27, dans lequel l'ensemble de surveillance (403) comprend sonar, équipement d'imagerie et éclairages sous-marins.
